# EUROPÄISCHE PATENTSCHRIFT

(11) **EP 0 536 561 B1**
(45) Veröffentlichungstag und Bekanntmachung des Hinweises auf die Patenterteilung: **27.12.1996**
(21) Anmeldenummer: 92115664.2
(22) Anmeldetag: 14.09.1992
(51) Int. Cl.: G01M 15/00

(54) **Verfahren zum Prüfen von Komponenten für Verbrennungsmotoren**
Procedure for testing combustion engine parts
Procédé d'essai des composants de moteurs à combustion

(30) Priorität: 17.09.1991 DE 4130846
(43) Veröffentlichungstag der Anmeldung: 14.04.1993
(73) Patentinhaber: EGM Entwicklungsgesellschaft für Montagetechnik GmbH, D-30855 Langenhagen (DE)
(72) Erfinder: Badur, Klaus, W-3008 Garbsen 1/Horst (DE); Nolting, Thomas, W-3012 Langenhagen (DE); Meier, Benedikt, W-3000 Hannover 1 (DE)
(74) Vertreter: Möller, Friedrich, Dipl.-Ing.

(56) Entgegenhaltungen:
- GB-A- 2 077 428
- US-A- 3 677 075

## Beschreibung

Die Erfindung betrifft Verfahren zum Prüfen von Komponenten für Verbrennungsmotoren, insbesondere Einzelkomponenten einer Einspritzanlage des Verbrennungsmotors Ansprüche 1, 6.

Steigende Qualitätsansprüche erfordern eine zuverlässige Prüfung bei der Serienherstellung, insbesondere der Montage, von Verbrennungsmotoren und den zum Betrieb derselben erforderlichen Komponenten. Die zuverlässige Prüfung dieser Komponenten gewinnt zunehmend an Bedeutung, weil diese bei modernen Motoren umfänglicher und komplexer geworden sind im Vergleich zu bisher bekannten Motoren. Dieses trifft vor allem für Einspritzmotoren zu.

Zur frühen Fehlererkennung, der Vereinfachung der Prüfung und schließlich zur Vermeidung von negativen Umwelteinflüssen ist es bereits bekannt, die Verbrennungsmotoren als solche im fertig montierten Zustand schleppend angetrieben zu prüfen. Diese Prüfung findet beim passiven Verbrennungsmotor im kalten, unbefeuerten Zustand statt. Deswegen wird eine solche Prüfung im Fachjargon als "Funktionstest" oder "Kalttest" bezeichnet. Nachfolgend wird der Einfachheit halber nur noch von "Kalttest" gesprochen. Es ist bislang nicht möglich, einzelne Komponenten, insbesondere solche einer Einspritzanlage, während des Kalttests zu prüfen.

Der Erfindung liegt nun die Aufgabe zugrunde, ein Verfahren zu schaffen, das einen Kalttest auch der Komponenten des Verbrennungsmotors, insbesondere der Einzelkomponenten seiner Einspritzanlage, ermöglicht.

Zur Lösung dieser Aufgabe weist das erfindungsgemäße Verfahren die Maßnahmen des Anspruchs 1 auf. Durch den Vergleich der beim Kalttest nur des Verbrennungsmotors gewonnenen Meßwerte mit den beim Kalttest des Motors und der Komponenten ermittelten Meßwerten entstehen Abweichungen, die Rückschlüsse auf die Funktion der Komponenten zulassen. Der Kalttest macht eine Brennstoffversorgung der zu prüfenden Komponenten überflüssig, was den Test vereinfacht. Es ist auch einfach möglich, solche Komponenten, die sich bei der Prüfung als fehlerhaft erwiesen haben, in diesem Prüfstadium auszutauschen.

Vorzugsweise erfolgt ein Vergleich der Meßwerte einzelner Komponenten. Hierdurch sind besonders zuverlässige Rückschlüsse auf bestimmte Fehler der jeweils einzeln geprüften Komponenten möglich. Zur separaten Prüfung der einzelnen Komponenten finden jeweils die gleichen nur am geschleppten Motor ermittelten Meßwerte als Vergleichswerte Verwendung. Auf diese Weise ist es nicht erforderlich, vor dem Kalttest einer jeden Komponente einen Kalttest nur des Motors vorzunehmen. Es reicht vielmehr, wenn die einmal im Kalttest nur des Motors aufgenommenen Meßwerte zum Vergleich mit den beim Kalttest ermittelten Meßwerten der jeweiligen Komponente herangezogen werden.

Beim bevorzugten Verfahren werden zur Prüfung Druckmeßwerte herangezogen. Insbesondere werden die Abgasgegendrücke oder die Ansaugunterdrücke miteinander verglichen. Dieser Vergleich erfolgt zweckmäßigerweise anhand einer Meßkurve aus einer Vielzahl von über einen Kurbelwellenumlauf aufgenommenen Druckmeßwerten, also einer Druckmeßwertkurve. Gleichwohl ist es alternativ auch denkbar, nur einzelne, charakteristische Druckmeßwerte oder eine Druckmeßwertgruppe für einen bestimmten Ausschnitt einer Kurbelwellenumdrehung bei der Prüfung der Komponenten als Vergleichswerte heranzuziehen. Als weitere Alternative bieten sich zu den Druckmeßwerten Drehmomentwerte, die vorzugsweise an der Kurbelwelle gemessen worden sind, als Vergleichswerte an. Diese sind beim Kalttest proportional zu den Abgasgegendrücken bzw. Ansaugunterdrücken, weil das an der Kurbelwelle für den zum Kalttest schleppenden Antrieb des Motors erforderliche Drehmoment mit dem Abgasgegendruck oder Ansaugunterdruck zu- bzw. abnimmt.

Zur Lösung der der Erfindung zugrundeliegenden Aufgabe dient weiterhin ein Verfahren mit den Maßnahmen des Anspruchs 6, was sowohl unabhängig vom Verfahren des Anspruchs 1, aber auch in Kombination mit demselben durchführbar ist. Bei diesem Verfahren werden die Komponenten zur Prüfung mit Druckluft beaufschlagt. Eine solche Druckluftbeaufschlagung ist für den Kalttest problemlos möglich, indem die Kraftstoffzufuhrleitungen zur Vermeidung der für den Test nachteiligen Kraftstoffversorgung mit Druckluft beaufschlagt werden.

Nach einer bevorzugten Weiterbildung des Verfahrens gemäß Anspruch 6 ist vorgesehen, zur Prüfung der Einspritzventile und des Systemdruckreglers die Drücke im Kraftstoffversorgungstakt des Verbrennungsmotors heranzuziehen. Es werden dazu die Druckänderungen in der zur Prüfung mit Druckluft beaufschlagten Kraftstoffzuleitung ausgewertet. Auf diese Weise kann ohne einen schleppenden Antrieb des Verbrennungsmotors die Prüfung erfolgen, indem nur die Druckveränderungen im Kraftstoffversorgungsnetz des Verbrennungsmotors zur Prüfung herangezogen werden, also kein Vergleich mit beim Schleppen des Verbrennungsmotors ermittelten Druckwerten erforderlich ist.

Bevorzugt wird das erfindungsgemäße Verfahren bei geschlossener Drosselklappe, geöffnetem Leerlaufsteller und einer der Drosselklappe vorgeordneten Blende oder Drossel durchgeführt. Diese ist zur Durchführung der Prüfung an einem Luftzufuhrkanal zur Drosselklappe angeschlossen. Die den Querschnitt dieser Zuluftvorleitung definiert verringernde Blende oder Drossel führt zu bestimmten Druckverhältnissen im Saugrohr und damit im Verbrennungsraum des Motors und gegebenenfalls in den zu prüfenden Komponenten. Diese sind unabhängig von der Stellung der Drosselklappe, die daher bei der Prüfung nicht verstellt zu werden braucht. Sie bleibt in ihrer üblicherweise geschlossenen Stellung. Alternativ kann die Prüfung aber auch bei geöffneter Drosselklappe erfolgen.

Bei der Prüfung der Einspritzventile wird verfahrensmäßig so vorgegangen, daß diese nicht mit Brennstoff, sondern mit Druckluft versorgt werden. Dazu wird die Kraftstoffleitung an einer geeigneten Stelle an eine Druckluftversorgung angeschlossen. Damit steht an der Brennstoffeingangsseite aller Einspritzventile zur Prüfung Druckluft an. Werden die Drucksignale im mit Druckluft beaufschlagten Kraftstoffzufuhrsystem gemessen, dann sind keine Vergleichswerte des geschleppten Verbrennungsmotors erforderlich. Die Prüfung kann also bei ungeschlepptem Verbrennungsmotor erfolgen.

Geprüft werden die Einspritzventile einzeln oder zusammen. Dazu wird an die Zuleitung zur Motorelektronik eine Prüfsteuerung angeschlossen, so daß zur Prüfung die Prüfsteuerung die Motorelektronik ersetzt. Die Prüfsteuerung öffnet nach und nach ein jeweils zu prüfendes Einspritzventil, während die übrigen Einspritzventile geschlossen bleiben. Alternativ werden alle Einspritzventile gleichzeitig geprüft, indem sie zusammen geöffnet und geschlossen werden. Wenn das Ergebnis darauf schließen läßt, daß mindestens ein Einspritzventil defekt ist, muß eine einzelne Prüfung jedes Einspritzventils erfolgen, damit das defekte Einspritzventil ermittelt werden kann. Wenn - was die Regel sein wird - alle Einspritzventile in Ordnung sind, läßt sich durch die gleichzeitige Prüfung aller Einspritzventile die Prüfzeit erheblich verkürzen.

Bei der Prüfung eines Systemdruckreglers wird dieser ebenfalls mit Druckluft beaufschlagt. Dazu ist die Kraftstoffzufuhrleitung zum Systemdruckregler an eine zum Prüfplatz gehörende Luftdruckversorgung angeschlossen. Erfindungsgemäß wird der Systemdruckregler mit Druckluft versorgt, die einen geringfügig über den am Systemdruckregler eingestellten Druck aufweist. Ein intakter Systemdruckregler muß also bei der Prüfung öffnen. Diese wesentliche Funktion des Systemdruckreglers ist mithin Gegenstand der Kaltprüfung. Bei geöffnetem Systemdruckregler gelangt die für die Prüfung erforderliche Druckluft zum Rücklaufanschluß, der zur Prüfung mit dem Saugrohr verbunden ist. Von hier aus gelangt die Druckluft in den Verbrennungsraum und kann damit den zu Vergleichszwecken herangezogenen Abgasgegendruck oder Ansaugunterdruck entsprechend beeinflussen. Alternativ oder auch zusätzlich wird der Luftdruck in der Kraftstoffzufuhrleitung gemessen. Dabei wird festgestellt, ob der über dem Systemdruck liegende Luftdruck abfällt, was bei funktionstüchtigem Systemdruckregler der Fall sein müßte. Diese Art der Prüfung des Systemdruckreglers hat den Vorteil, daß - wie bei der Prüfung der Einspritzventile - in der Kraftstoffzufuhrleitung ohne ein Schleppen des Verbrennungsmotors gemessen werden kann, weil keine Druckvergleiche nötig sind. Weiterhin ist bei dieser Art der Prüfung ein Anschluß der Rücklaufleistung am Saugrohr nicht erforderlich.

Die Prüfung eines Leerlaufstellers, der in einer Bypassleitung zur Drosselklappe angeordnet ist, erfolgt ebenfalls pneumatisch. Durch eine Prüfschaltung, die wiederum über die Zuleitung zur Motorelektronik an die Prüfschaltung angeschlossen ist, wird zur Prüfung der Leerlaufsteller in verschiedene Positionen gebracht, vorzugsweise in eine voll geöffnete Stellung und eine geschlossene Stellung. Durch die Verbindung des Leerlaufstellers über die Bypassleitung mit dem Saugrohr erfolgt wiederum je nach Ansteuerung des Leerlaufstellers eine Beeinflussung des Ansaugunterdrucks bzw. Abgasgegendrucks im Verbrennungsmotor, woraus sich Vergleichswerte ermitteln lassen, die darauf hindeuten, ob der Leerlaufsteller die von der Prüfsteuerung vorgegebene Stellung (geschlossen oder offen) eingenommen hat und mithin funktionstüchtig ist.

Weitere erfindungswesentliche Maßnahmen des Verfahrens ergeben sich aus den übrigen Unteransprüchen.

Bevorzugte Ausführungsbeispiele des erfindungsgemäßen Verfahrens werden nachfolgend anhand der Zeichnung näher erläutert. In dieser zeigen:
- Fig. 1: einen Querschnitt durch einen Teil eines Verbrennungsmotors und Einzelkomponenten seiner Einspritzanlage,
- Fig. 2: ein Blockschaltbild des Verbrennungsmotors mit Einzelkomponenten seiner Einspritzanlage,
- Fig. 3: ein Einspritzventil im Querschnitt,
- Fig. 4: ein Blockschaltbild einer Prüfschaltung der Einspritzventile,
- Fig. 5: ein Beispiel für einen Meßschrieb zum Vergleich der reinen Motorprüfung mit der Prüfung des Motors bei einem geöffneten Einspritzventil und bei über zwei Kurbelwellenumdrehungen aufgetragenem Abgasgegendruck,
- Fig. 6: ein weiteres Beispiel für einen Meßschrieb zur Prüfung der Einspritzventile,
- Fig. 7: einen Querschnitt durch einen Systemdruckregler,
- Fig. 8: ein Blockschaltbild zur Prüfung des Systemdruckreglers,
- Fig. 9: einen Querschnitt durch einen Leerlaufsteller,
- Fig. 10: einen um 90° verdrehten Querschnitt durch einen Teil des Leerlaufstellers gemäß der Fig. 9,
- Fig. 11: ein Blockschaltbild zur Prüfung des Leerlaufstellers, und
- Fig. 12: einen Meßschrieb zur Prüfung des Leerlaufstellers.

Die nachfolgend erläuterten Verfahren dienen zum Kalttest von verschiedenen Komponenten der Einspritzanlage eines Ottomotors, nämlich Einspritzventile 10, Systemdruckregler 11 und Leerlaufsteller 12.

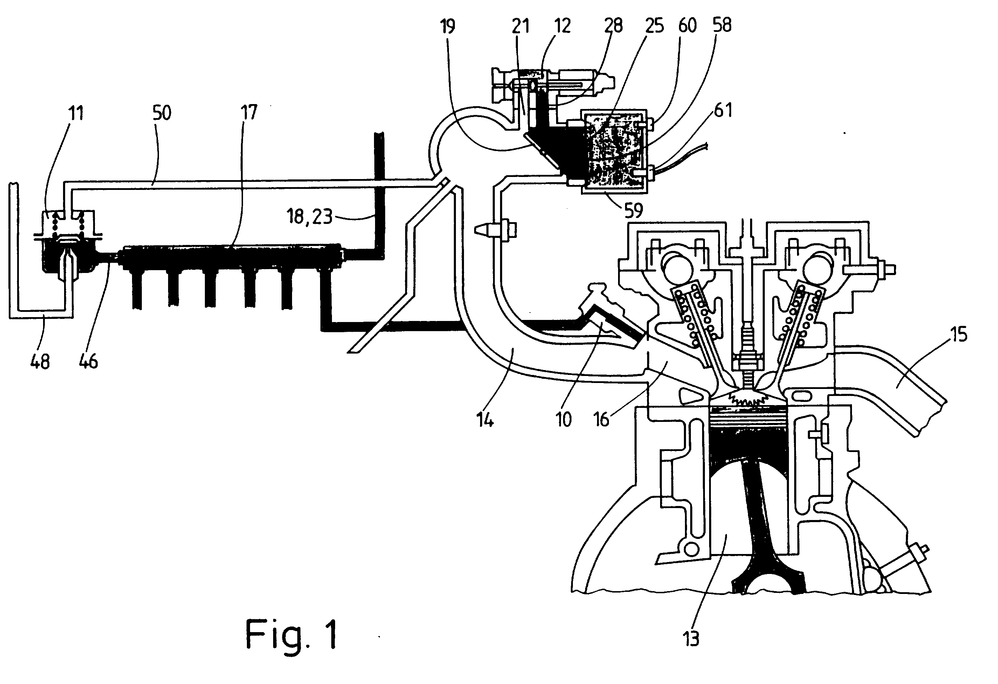

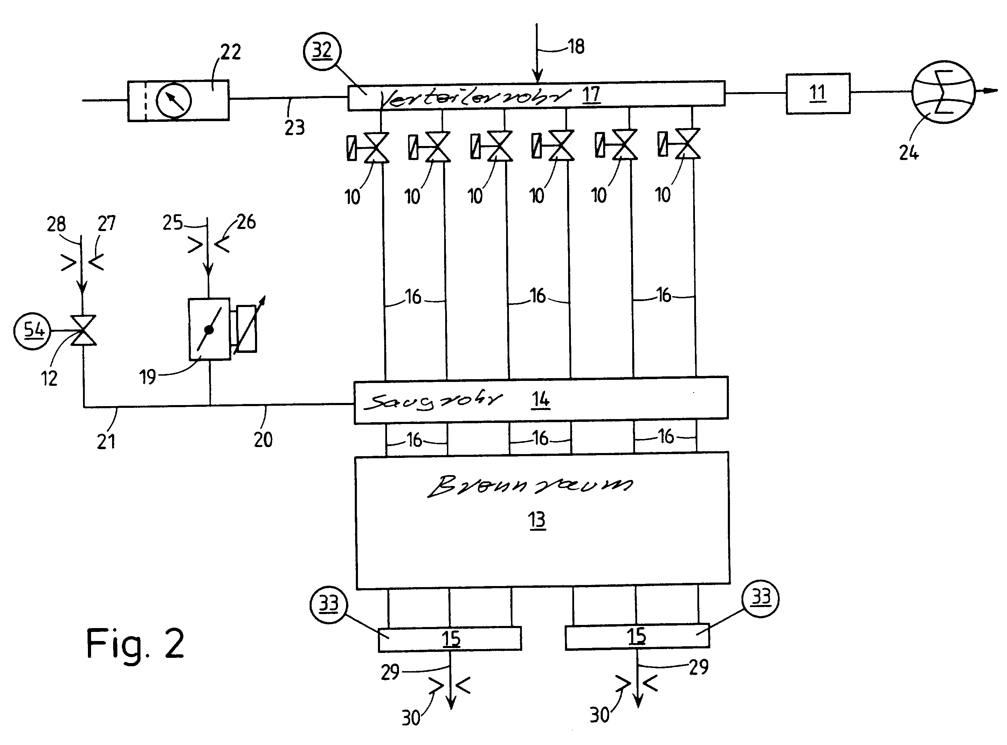

In den Fig. 1 und 2 sind ein Teil des Ottomotors und einzelne Komponenten seiner Einspritzanlage - zum Teil schematisch - dargestellt. Einem Brennraum 13 des hier sechszylindrigen Ottomotors ist ein Saugrohr 14 einspritzseitig vorgeordnet. Abgasseitig sind dem Brennraum 13 zwei Abgaskrümmer 15 nachgeordnet. Vor dem Saugrohr 14 befinden sich die Einspritzventile 10. Jedem Zylinder ist ein Einspritzventil 10 zugeordnet, so daß im gezeigten Ausführungsbeispiel sechs Einspritzventile 10 vorhanden sind. Schematisch ist in der Fig. 2 die Verbindung zwischen den Einspritzventilen 10 und dem Saugrohr 14 sowie zwischen dem Saugrohr 14 und dem Brennraum 13 durch sechs Einspritzpfade 16 angedeutet. Den sechs Einspritzventilen 10 ist ein Verteilerrohr 17 vorgeordnet, das mit einer einzigen Brennstoffzufuhrleitung 18 versehen ist. Das Verteilerrohr 17 dient beim normal betriebenen Ottomotor zur Verteilung des durch die Brennstoffzufuhrleitung 18 zugeführten Brennstoffs zu den einzelnen Einspritzventilen 10. Dem Verteilerrohr 17 vorgeordnet ist der Systemdruckregler 11. Dem Saugrohr 14 ist vorgeordnet eine Drosselklappe 19 und der Leerlaufsteller 12. Die Drosselklappe 19 ist durch eine Luftleitung 20 mit dem Sammelsaugrohr 14 verbunden. Der Leerlaufsteller 12 ist ebenfalls mit dem Saugrohr 14 verbunden, und zwar durch eine Bypassleitung 21.

Zur Durchführung der erfindungsgemäßen Prüfung ist das Verteilerrohr 17 von einer Druckluftversorgungseinrichtung 22 mit Druckluft speisbar. Diese ist in der Fig. 2 zur besseren Verdeutlichung direkt mit dem Verteilerrohr 17 verbunden. In der Praxis wird die Druckluftversorgungseinrichtung 22 an die Brennstoffzufuhrleitung 18 angeschlossen, und zwar vorzugsweise mittels einer Schnellkupplung. Die Druckluftversorgungseinrichtung 22 verfügt über zwei nicht gezeigte Feindruckregler, die zum einen auf etwa den Systemdruck (ca. 2,4 bar) und zum anderen über den Systemdruck (ca. 4,0 bar) eingestellt sind. Von jedem Feindruckregler führt eine Leitung zu einem Mehrwegeventil. Je nach Schaltstellung desselben wird die Brennstoffzufuhrleitung 18 mit Druckluft versorgt, die entweder einen Druck etwas unterhalb des Systemdrucks oder einen Druck geringfügig oberhalb des Systemdrucks aufweist. Weiterhin ist zur Durchführung des erfindungsgemäßen Prüfverfahrens der Systemdruckregler 11 mit Druckluft versorgbar, wobei in die Druckluftzufuhrleitung 23 zu Meßzwecken ein Durchflußmesser 24 integriert werden kann.

Ebenfalls nur zur Durchführung des erfindungsgemäßen Verfahrens ist eine zur Drosselklappe 19 führende Luftversorgungsleitung 25 mit einer Blende 26 versehen. Diese schafft einen definierten, verengten Querschnitt in der Luftversorgungsleitung 25. Eine weitere Blende 27 ist zur Prüfung in einer Bypassversorgungsleitung vor dem Leerlaufsteller 12 angeordnet. Schließlich ist in einem Ausgang 29 eines jeden Abgaskrümmers 15 eine weitere Blende 30 angeordnet. Die Blenden 30 beider Abgaskrümmer 15 verfügen über einen gleich großen Durchlaß.

Zur Ermittlung der Meßwerte bei der erfindungsgemäßen Prüfung kann der Drosselklappe 19 ein nicht näher bezeichneter Ansaugunterdrucksensor zugeordnet sein. Im Verteilerrohr 17 befindet sich ein Systemdrucksensor 32 und in jedem Abgaskrümmer 15 ist ein Abgasgegendrucksensor 33 vorhanden.

Die elektrisch, nämlich elektromagnetisch oder elektromotorisch, betriebenen Einspritzventile 10 und der Leerlaufsteller 12 sind bei der Prüfung über die üblicherweise vorhandene Zuleitung zur Motorelektronik an eine nicht dargestellte Prüfsteuerung (Meßrechner) angeschlossen. Diese steuert während der Prüfung die Einspritzventile 10 und den Leerlaufsteller 12. Die Drosselklappe 19 wird in der Regel manuell betätigt. In besonderen Fällen kann sie aber auch elektrisch betätigbar sein (ähnlich wie z. B. die Einspritzventile 10).

Bei der Prüfung der Einspritzventile 10, des Systemdruckreglers 11 und des Leerlaufstellers 12 wird grundsätzlich gleichermaßen vorgegangen, indem zunächst bei nicht betätigtem, also geschlossenem Systemdruckregler 11, geschlossenem Leerlaufsteller 12 und geschlossenem Einspritzventil 10 der Ottomotor schleppend angetrieben wird, und zwar mit einer Drehzahl zwischen 20 und 200 min⁻¹, insbesondere zwischen 60 und 120 min⁻¹. Hierbei wird im Kalttestverfahren zunächst nur der Motor auf seine Funktion überprüft, wobei insbesondere der Ansaugunterdruck, der Abgasgegendruck und das Antriebsdrehmoment nur des Motors ermittelt werden. Dazu kann vorgegangen werden nach dem Verfahren der deutschen Patentanmeldung P 40 25 882 (EP-A2-456 244 veröffentlicht 13.11.91).

Ist der Kalttest des Ottomotors (allein) abgeschlossen und der Ottomotor daraufhin als "in Ordnung" befunden worden, erfolgt nacheinander ein Test der einzelnen Einspritzventile 10, des Systemdruckreglers 11 und des Leerlaufstellers 12. Die Reihenfolge kann dabei von der vorstehenden Erwähnung abweichen. Diese Prüfungen haben alle gemeinsam, daß sie pneumatisch ablaufen, wozu bei der Prüfung der Einspritzventile 10 und des Systemdruckregelers 11 anstelle einer Versorgung mit Kraftstoff (im normalen Betrieb des Ottomotors) eine Versorgung mit Druckluft durch die Druckluftversorgungseinrichtung 22 erfolgt. Die Einspritzventile 10, der Systemdruckregler 11 und der Leerlaufsteller 12 nehmen bei ihrer pneumatischen Prüfung Einfluß auf den Ansaugunterdruck, den Abgasgegendruck und das Antriebsdrehmoment des bei der Prüfung ebenfalls schleppend angetriebenen Motors. Diese Werte werden mit den entsprechenden Werten beim vorhergehenden Kalttest nur des Motors (bei nicht betätigten Einspritzventilen 10, Systemdruckregler 11 und Leerlaufsteller 12) erfindungsgemäß verglichen. Je nach Art der Prüfung müssen die zu vergleichenden Meßwerte gleich sein, oder voneinander durch Druckverringerung oder Druckerhöhung abweichen. Erreichen die bei der jeweiligen Messung erhaltenen Druckvergleiche nicht die erwarteten Ergebnisse, deutet das auf einen Fehler im geprüften Einspritzventil 10, Systemdruckregler 11 oder Leerlaufsteller 12 bzw. eine falsche Montage derselben hin.

Eine Prüfung der Einspritzventile 10 und des Systemdruckreglers 11 bei stillstehendem Ottomotor und ohne Zugriff auf die Druckverhältnisse im Ottomotor, insbesondere den Ansaugunterdruck und den Abgasgegendruck, erfolgt durch eine Ermittlung des Drucks in der Druckluftzufuhrleitung 23. Dazu ist im zur Druckluftversorgungseinrichtung 22 gehörenden Teil der Druckluftzufuhrleitung 23 eine nicht gezeigte Drossel angeordnet, hinter der in Richtung zum Verteilerrohr 17 ein hier als Relativdruckaufnehmer ausgebildeter Drucksensor angeordnet ist. Gemessen wird der beim Öffnen der Einspritzventile 10 bzw. des Systemdruckreglers 11 sich einstellende Druckabfall hinter der Drossel.

Nachfolgend werden die Prüfungen der Einspritzventile 10, des Systemdruckreglers 11 und des Leerlaufstellers 12 im einzelnen erläutert.

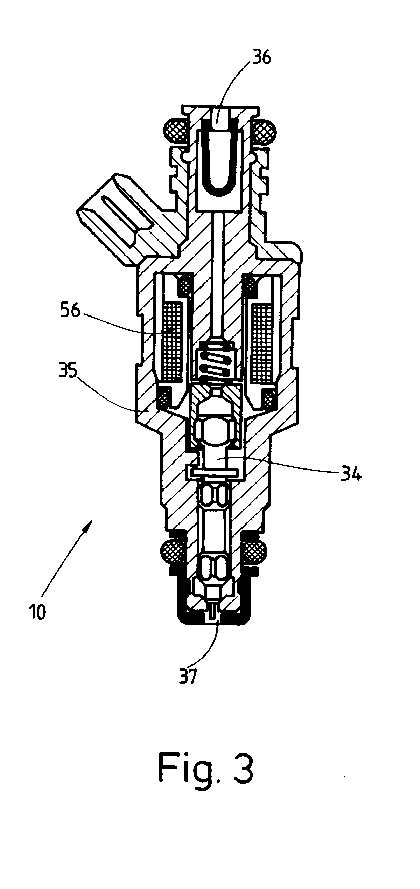

In der Fig. 3 ist ein Einspritzventil 10 im Schnitt dargestellt. Dieses verfügt über ein Elektromagnet 56, das, wenn es mit Strom versorgt wird, einen Magnetanker 34 im Gehäuse 35 des Einspritzventils 10 anhebt, wodurch von einer oberen Versorgungsbohrung 36 zur Prüfung zugeführte Druckluft durch das Gehäuse 35 hindurchströmen und aus einer unteren Einspritzöffnung 37 ausströmen kann. Bei arbeitendem Ottomotor wird durch die Versorgungsbohrung 36 dem Einspritzventil 10 Brennstoff zugeführt.

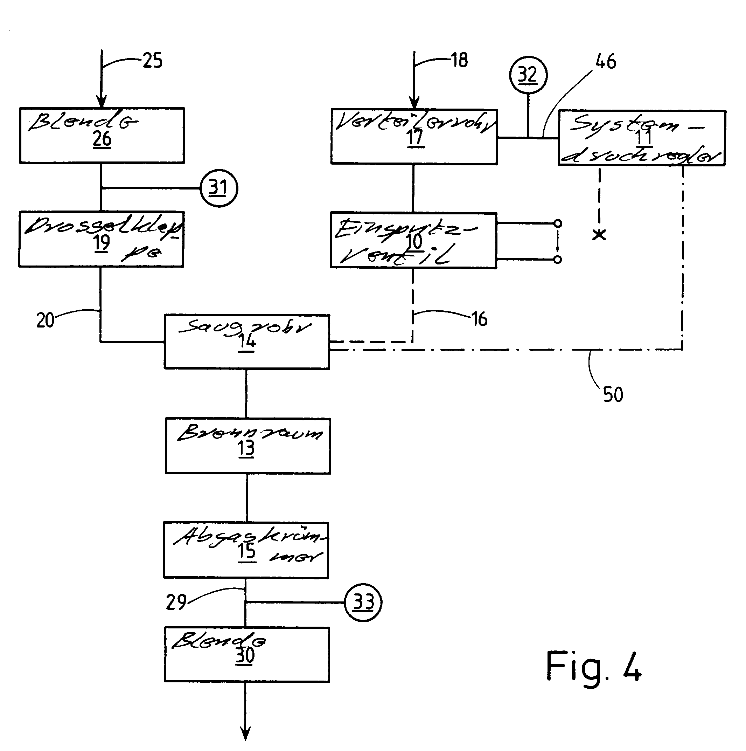

Ein in der Fig. 4 dargestelltes Blockschaltbild zeigt eine Prüfschaltung eines Einspritzventils 10. Dieses wird demnach vom Verteilerrohr 17 mit Druckluft versorgt. Wird das Einspritzventil 10 durch Anlegen einer Spannung geöffnet, gelangt die Druckluft in das Saugrohr 14 und von dort in den Brennraum 13.

Geprüft werden die Einspritzventile 10 einzeln. Es wird demzufolge der Reihe nach jeweils ein Einspritzventil 10 geöffnet, während die übrigen (fünf) Einspritzventile 10 geschlossen bleiben. Über die Prüfschaltung wird das jeweils zu prüfende Einspritzventil 10 geöffnet. Dabei gelangt durch das jeweils geöffnete Einspritzventil 10 Druckluft über das Saugrohr 14 in den Brennraum 13. Das führt hierin zu einer Druckerhöhung gegenüber dem bei allen geschlossenen Einspritzventilen 10 allein geschleppten Ottomotor. Diese Druckerhöhung wird infolge eines erhöhten Abgasgegendrucks mittels der Abgasgegendrucksensoren 33 an den Abgaskrümmern 15 gemessen.

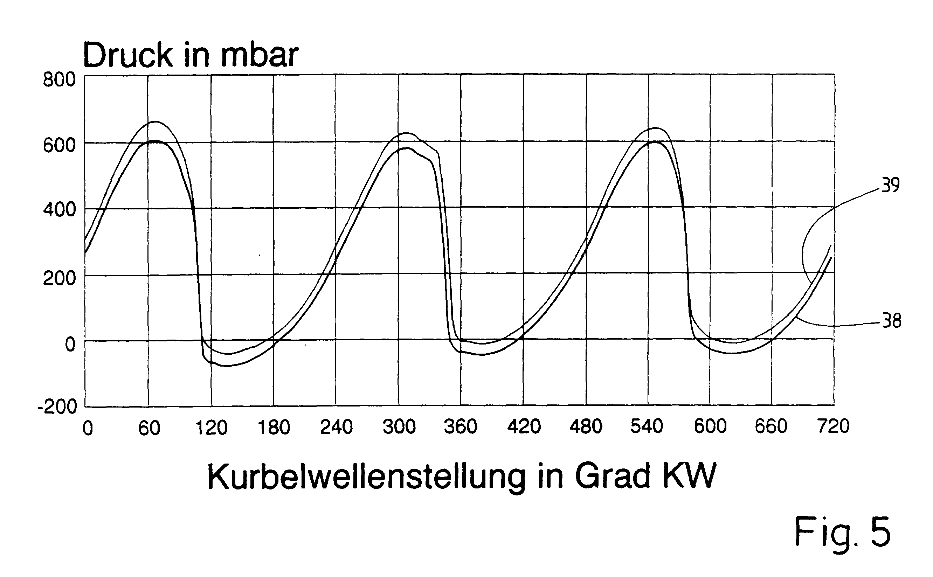

Die Fig. 5 zeigt einen entsprechenden Meßschrieb. Die untere Kurve 38 stellt in diesem den Verlauf des Abgasgegendrucks über zwei Kurbelwellenumdrehungen (720°) des allein bei geschlossenen Einspritzventilen 10 geschleppten Ottomotors dar. Demgegenüber dokumentiert die obere Kurve 39 den Abgasgegendruck beim Prüfen eines Einspritzventils 10, also beim Schleppen des Ottomotors mit einem geöffneten und fünf geschlossenen Einspritzventilen 10. Dadurch wird deutlich, daß bei der Prüfung der dynamische Anteil des Abgasgegendrucks erhalten bleibt. Er wird lediglich überlagert durch einen rein statischen Anteil der durch das jeweils zum Prüfen geöffnete Einspritzventil 10 zugeführten Druckluft. Hieraus ergibt sich, daß das geprüfte Einspritzventil 10 ordnungsgemäß arbeitet, sich nämlich öffnen läßt, wenn die Kurven voneinander abweichen. Würde bei der Prüfung des Einspritzventils 10 die obere Kurve 39 nicht erscheinen, also mit der unteren Kurve 38 deckungsgleich sein, wäre das ein Anzeichen für ein nichtöffnendes, also defektes Einspritzventil 10.

Ein alternatives Prüfverfahren für die Einspritzventile 10 erfolgt ohne einen schleppenden Antrieb des Ottomotors und ohne Heranziehung der sich beim Schleppen des Ottomotors ergebenden Druckwerte. Hierbei wird wiederum durch die Druckluftversorgungseinrichtung 22 und die Druckluftzufuhrleitung 23 vor den Einspritzventilen 10 ein Luftdruck aufgebaut, der etwa dem Systemdruck entspricht, vorzugsweise etwas geringer ist, nämlich etwa 2,4 bar aufweist. Es stellt sich dann hinter einer Drossel in der Druckluftzufuhrleitung 23 der gleiche Druck ein. Wird nun ein erstes Einspritzventil 10 geöffnet, fällt zwischen der Drossel und dem Einspritzventil 10 der Druck ab. Dieser Druckabfall wird vom Relativdruckaufnehmer zwischen der Drossel und dem Verteilerrohr 17 erfaßt und von einem Meßrechner ausgewertet.

Es ist vorgesehen, alle Einspritzventile 10 zur Prüfung gleichzeitig zu öffnen und zu schließen. Dadurch wird die Prüfzeit erheblich verringert. Bei dieser gleichzeitigen Prüfung aller Einspritzventile 10 muß sich eine bestimmte Druckänderung ergeben. Ist dieses nicht der Fall, ist das ein Anzeichen dafür, daß mindestens ein Einspritzventil 10 nicht öffnet. Es müssen danach die Einspritzventile 10 einzeln geprüft werden.

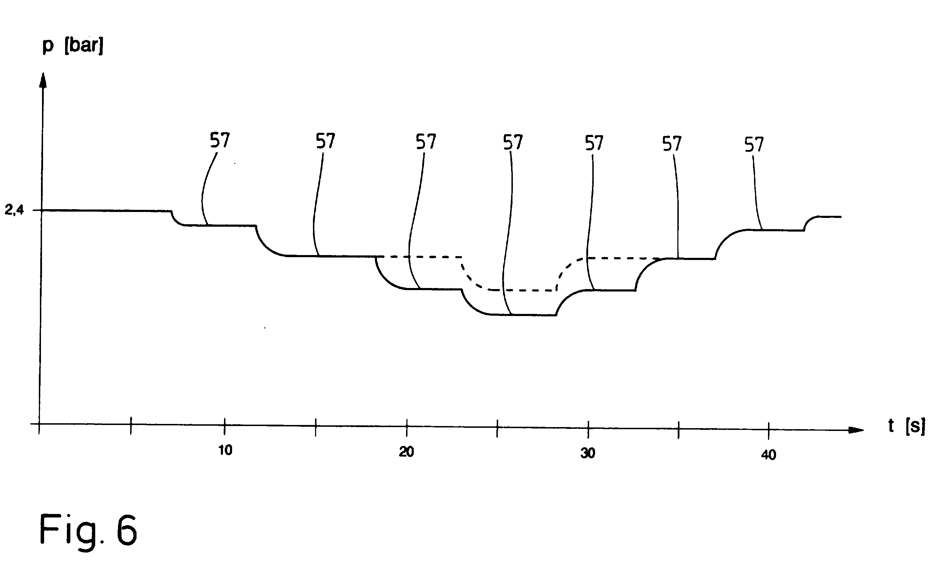

Als besonders vorteilhaft hat es sich erwiesen, die Einspritzventile 10 zur Prüfung nacheinander zu öffnen und zu schließen. Dabei bleiben während des Öffnens der nächsten Einspritzventile 10 die zuvor geöffneten Einspritzventile 10 geöffnet. Es muß sich dann bei intakten Einspritzventilen 10 ein treppenförmiger Kurvenverlauf gemäß der Fig. 6 einstellen. Hierbei handelt es sich um einen vierzylindrigen Ottomotor mit nur vier Einspritzventilen 10. Bei jedem Öffnen und Schließen eines Einspritzventils 10 entstehen in der Meßkurve Stufen 57, indem bei jedem Öffnen eines Einspritzventils 10 es zu einem Druckabfall kommt, wohingegen beim Schließen jedes Einspritzventils 10 eine Druckerhöhung stattfindet. Ein fehlerhaftes Einspritzventil 10 würde dadurch erkennbar, daß die entsprechende Stufe im Meßschrieb fehlt. Dieser Fall ist für ein nichtöffnendes drittes Einspritzventil 10 durch eine gestrichelte Linie in der Fig. 6 angedeutet.

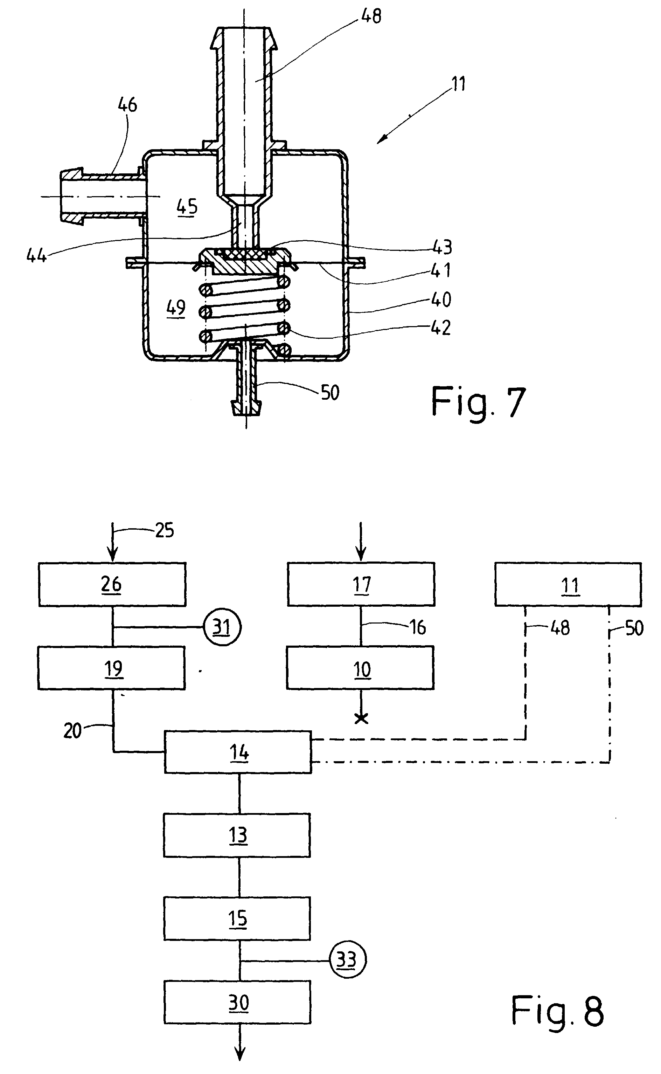

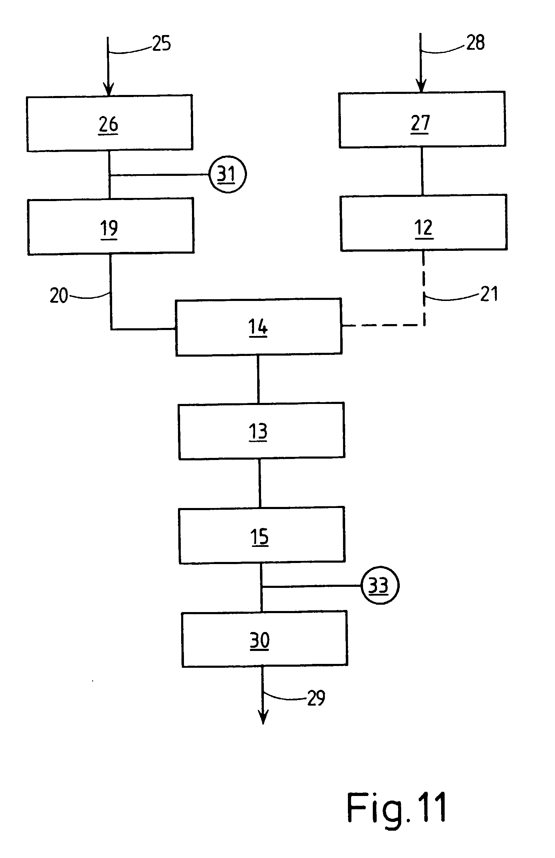

Der Systemdruckregler 11 ist in der Fig. 7 im Schnitt dargestellt. Dieser verfügt über ein Gehäuse 40, in dem an einer Membran 41 eine durch eine Druckfeder 42 belastete Ventilplatte 43 gelagert ist. Der Ventilplatte 43 ist ein Ventilrohr 44 zugeordnet, das von der Ventilplatte 43 verschlossen ist, so lange der am Systemdruckregler 11 eingestellte Druck im oberhalb der Membran 41 sich befindenden Druckraum 45 nicht überschritten wird. Überschreitet der Druck im Druckraum 45 den eingestellten Druck, drückt er die Membrane 41 mit der Ventilplatte 43 gegen die Kraft der Druckfeder 42 nach unten und öffnet das Ventilrohr 44, wodurch überschüssiges Medium im Druckraum 45 so lange abfließt, bis sich der Nenndruck wieder eingestellt hat.

Das Gehäuse 35 des Systemdruckreglers 11 weist einen Kraftstoffzulaufanschluß 46 auf. Das Ventilrohr 44 ist mit einem Rücklaufanschluß 48 verbunden, durch das das beim Druckausgleich anfallende Medium (im Normalbetrieb des Ottomotors Kraftstoff) zurückströmen kann zum Tank. In einem Gegendruckraum 49 unterhalb der Membrane 41 mündet ein Saugrohranschluß 50, der zum Saugrohr 14 geführt den Regeldruck des Systemdruckreglers 11 bestimmt.

Zum Prüfen des Systemdruckreglers 11 wird gemäß dem Blockschaltbild der Fig. 8 der Kraftstoffzulaufanschluß 46 mit Druckluft aus der Druckluftversorgungseinrichtung 22 versorgt. Die Druckluft weist erfindungsgemäß einen Druck auf, der etwas oberhalb des Nenndrucks des Systemdruckreglers 11 liegt. Dadurch müßte der intakte Systemdruckregler 11 zur Prüfung öffnen, wodurch über das Ventilrohr 44 und den Rücklaufanschluß 48 überschüssige Druckluft austritt. Diese wird zur Prüfung nicht wie beim Normalbetrieb des Ottomotors zur Rücklaufleitung geführt; vielmehr zum Saugrohr 14. Auf diese Weise wird beim intakten Systemdruckregler 11 die überschüssige Druckluft dem Brennraum 13 des Ottomotors zugeführt, wodurch - wie bei der Prüfung der Einspritzventile 10 - der Abgasgegendruck erhöht wird. Bei defektem Systemdruckregler 11 würde das Ventilrohr 44 geschlossen bleiben, so daß über das Saugrohr 14 dem Brennraum 13 keine zusätzliche Druckluft zugeführt werden könnte. Bei der Prüfung würde dann der gleiche Abgasgegendruck festgestellt, der vorher beim allein geschleppten Ottomotor ermittelt wurde.

Der Saugrohranschluß 50 kann während der Prüfung des Systemdruckreglers 11 üblicherweise mit dem Saugrohr 14 verbunden sein. Es ist aber auch denkbar, den Saugrohranschluß 50 während der Prüfung des Systemdruckreglers 11 abzudichten.

Bei der Prüfung des Systemdruckreglers 11 durch Vergleich der Abgasüberdrücke würde bei intaktem Systemdruckregler 11 etwa ein Meßschrieb entstehen, der dem der Prüfung der einzelnen Einspritzventile 10 entspricht und in der Fig. 5 dargestellt ist.

Nach einem anderen Vorschlag der Erfindung kann der Systemdruckregler 11 - wie die Einspritzventile 10 - bei stillstehendem Ottomotor geprüft werden. Hierbei sind der Kraftstoffzulaufanschluß 46, der Rücklaufanschluß 48 und der Saugrohranschluß 50 wie für den regulären Betrieb des Ottomotors erforderlich geschaltet. Der am Verteilerrohr 17 angeschlossene Kraftstoffzulaufanschluß 46 des Systemdruckreglers 11 wird zur Prüfung über die Druckluftzufuhrleitung 23 mit Druckluft versorgt. Diese hat einen Druck, der über dem Systemdruck liegt, und zwar vorzugsweise 4,0 bar. Infolge dieses Überdrucks wird der Systemdruckregler 11 dahingehend geprüft, ob und bei welchem Druck er öffnet. Diese Drücke werden wiederum gemessen durch den Relativdruckaufnehmer, der im Bereich zwischen der Drossel und dem Verteilerrohr 17 bzw. dem Systemdruckregler 11 an die Druckluftzufuhrleitung 23 angeschlossen ist und mit dem Meßrechner in Verbindung steht.

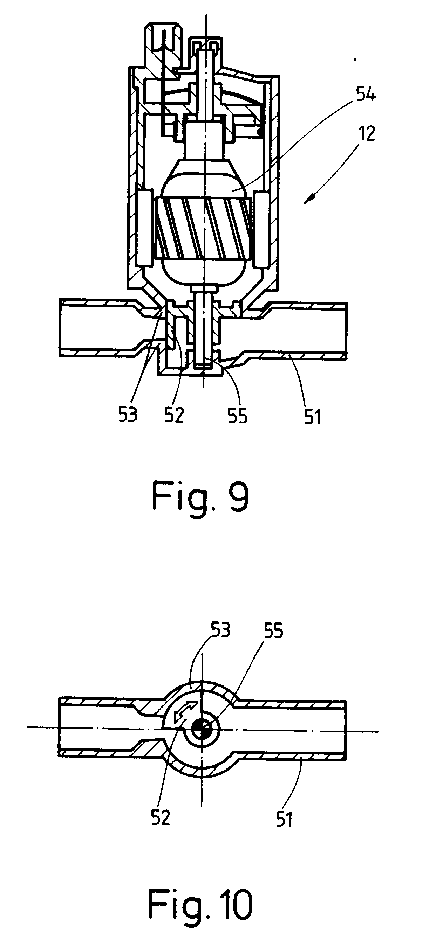

Der in den Fig. 9 und 10 gezeigte Leerlaufsteller 12 verfügt über einen in der Bypassleitung 21 anzuordnenden Bypassrohrabschnitt 51, der ganz oder teilweise verschließbar ist durch einen Drehschieber 52, der in einem korrespondierenden Drehschiebersitz 53 des Bypassrohrabschnitts 51 angeordnet ist. Der Drehschieber 52 ist durch einen Stellmotor 54 um eine quer zur Durchflußrichtung des Bypassrohrabschnitts 51 verlaufende Drehachse 55 so verdrehbar, daß der Bypassrohrabschnitt 51 ganz bzw. teilweise freigegeben und vollständig geschlossen werden kann.

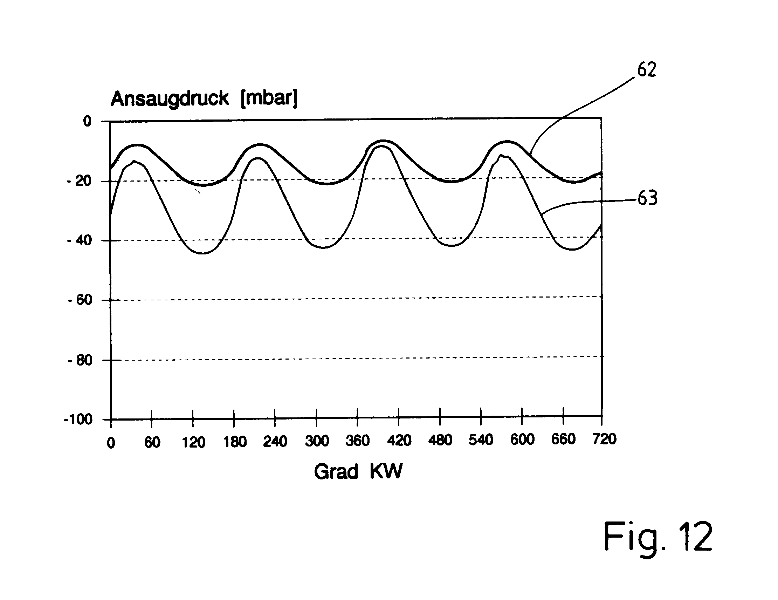

Das der Fig. 11 entnehmbare Blockschaltbild verdeutlicht die Schaltung des Leerlaufstellers 12 während seiner Prüfung. Der Leerlaufsteller 12 wird von der Druckluftversorgungseinrichtung 22 mit Druckluft versorgt. Diese wird an der vor dem Bypassrohrabschnitt 51 des Leerlaufstellers 12 angeordneten Blende 27 gedrosselt.

Zur Prüfung wird von der Prüfschaltung der Stellmotor 54 des Leerlaufstellers 12 derart angesteuert, daß der Drehschieber 52 den Bypassrohrabschnitt 51 entweder ganz verschließt oder öffnet. Dementsprechend wird bei geschlossenen Einspritzventilen 10 und geschlossenem Systemdruckregler 11 über das Saugrohr 14 dem Brennraum 13 bei geöffnetem Leerlaufsteller 12 Druckluft zugeführt. Der Abgasüberdruck erhöht sich dadurch, so daß eine vom allein geschleppten Ottomotor abweichende Abgasüberdruck-Kurve entsteht. Der Meßschrieb könnte daher bei geöffnetem Leerlaufsteller 12 qualitativ dem der Fig. 5 entsprechen. Bei geschlossenem Leerlaufsteller 12 hingegen wird das Saugrohr 14 nicht mehr mit zusätzlicher Druckluft versorgt. Es müßte sich dann im Abgaskrümmer 15 ein Abgasüberdruck einstellen, der dem Abgasüberdruck des allein geschleppten Ottomotors entspricht. Die beiden in der Fig. 5 dargestellten Kurven müßten sich dann in etwa überlagern.

Werden bei der Prüfung des Leerlaufstellers 12 die in Abhängigkeit von der jeweiligen Stellung des Drehschiebers 52 erwarteten Abgasgegendruckverläufe nicht erreicht, deutet das auf einen Fehler des Leerlaufstellers 12 hin.

Ein alternatives Prüfverfahren des Leerlaufstellers 12 erfolgt ebenfalls bei geschlepptem Ottomotor. Dazu ist - wie aus der Fig. 1 ersichtlich - an einen Anschlußflansch 58 für einen zur Prüfung noch nicht montierten Luftfilter ein geschlossenes Prüfgehäuse 59 angeflanscht, das auch zu anderen Funktionstests erforderlich ist. Das Prüfgehäuse 59 ist mit einer Drossel 60 versehen. Durch diese kann gedrosselte Außenluft (und Atmosphärendruck) in das Prüfgehäuse 59 gelangen. Weiterhin ist das Prüfgehäuse 59 mit einem Drucksensor 61 versehen. Durch diesen ist der Luftdruck im Inneren des Prüfgehäuses 59 meßbar. Der gemessene Druck wird an die Prüfschaltung weitergegeben.

Geprüft wird bei geschlossener Drosselklappe 19. Diese dichtet aber den Ansaugkrümmer 64 nicht vollständig gegenüber dem Prüfgehäuse 59 ab. Deswegen entsteht bei geschlepptem Ottomotor trotz geschlossenem Leerlaufsteller 12 im Prüfgehäuse 59 ein sich geringfügig mit dem Ansaugdruck ändernder Druckverlauf, der im Meßschrieb gemäß der Fig. 12 durch die obere Kurve 62 dargestellt ist. Bei geöffnetem Leerlaufsteller 12 können sich die beim Schleppen des Ottomotors im Ansaugkrümmer 64 entstehenden (Unterdruck-)Signale bis in das Prüfgehäuse 59 fortpflanzen. In diesem entsteht bei ordnungsgemäß sich öffnendem Leerlaufsteller 12 eine größere Druckdynamik, die aus der größere Amplituden aufweisenden unteren Kurve 63 im Meßschrieb der Fig. 12 deutlich erkennbar wird.

Die vorstehend durchgeführten Prüfungen können auch durch Vergleiche der Ansaugunterdruckwerte oder des Drehmomentenverlaufs beim Schleppen des Ottomotors durchgeführt werden.

## Patentansprüche

1. Verfahren zum Prüfen eines Teils oder von Teilen für Verbrennungsmotoren bei der Motormontage, insbesondere eines Teils oder Teilen einer Einspritzanlage, wobei mindestens der Verbrennungsmotor schleppend im Kalttest angetrieben wird und bestimmte Meßwerte, die beim Kalttest nur des Verbrennungsmotors aufgenommen worden sind, mit korrespondierenden Meßwerten, die beim Kalttest des Verbrennungsmotors und eines oder jedes zu prüfenden Teils ermittelt worden sind, verglichen werden.

2. Verfahren nach Anspruch 1, dadurch gekennzeichnet, daß einzelne Teile einer Einspritzanlage nacheinander geprüft werden.

3. Verfahren nach Anspruch 1 oder 2, dadurch gekennzeichnet, daß die nur im Verbrennungsmotor ermittelten Meßwerte zur Prüfung mehrerer, insbesondere aller zu prüfenden Komponenten herangezogen werden.

4. Verfahren nach einem der Ansprüche 1 bis 3, dadurch gekennzeichnet, daß Druckmeßwerte, insbesondere der Abgasgegendruck und/oder der Ansaugunterdruck, miteinander verglichen werden.

5. Verfahren nach einem der Ansprüche 1 bis 4, dadurch gekennzeichnet, daß zur Ermittlung der nur auf den Verbrennungsmotor bezogenen Meßwerte die zu prüfenden Komponenten in eine Betriebsstellung gebracht werden, in der sie die nur am Verbrennungsmotor zu ermittelnden Meßwerte nicht beeinflussen, insbesondere die Komponenten nicht mit Druckluft versorgt werden oder keinen Druckluftdurchlaß ermöglichen.

6. Verfahren zum Prüfen eines am Kraftstoffversorgungstrakt eines Verbrennungsmotors montierten Teils oder von entsprechend montierten Teilen einer Einspritzanlage, wobei das oder jedes Teil der Einspritzanlage am Kraftstoffversorgungstrakt montiert und nachfolgend zur Prüfung mit Druckluft beaufschlagt wird.

7. Verfahren nach einem der Ansprüche 1 bis 6, dadurch gekennzeichnet, daß Kraftstoffanschlüsse an eine Druckluftversorgungseinrichtung (22) angeschlossen werden.

8. Verfahren nach Anspruch 6 oder 7, dadurch gekennzeichnet, daß die Einspritzventile (10) und der Systemdruckregler (11) bei ungeschlepptem Verbrennungsmotor geprüft werden.

9. Verfahren nach einem der Ansprüche 6 bis 8, dadurch gekennzeichnet, daß zur Prüfung der Einspritzventile (10) und des Systemreglers (11) die Drucksignale im mit Druckluft beaufschlagten Kraftstoffzufuhrsystem, insbesondere in der Kraftstoffversorgungsleitung, herangezogen werden.

10. Verfahren nach einem der Ansprüche 1 bis 9, dadurch gekennzeichnet, daß die Prüfung der Komponenten mit voll geöffneter Drosselklappe (19) und vor der Drosselklappe (19) angeordneter Blende (26) zur Verringerung bzw. Drosselung der Luftzufuhr zur Ansaugleitung (Luftversorgungsleitung 25) durchgeführt wird.

11. Verfahren nach einem der Ansprüche 1 bis 10, dadurch gekennzeichnet, daß die Prüfung von Einspritzventilen (10) bei eingangsseitiger Druckluftbeaufschlagung aller Einspritzventile (10) erfolgt, insbesondere derart, daß die Einspritzventile (10) nacheinander einzeln geprüft werden, indem während des gesamten Prüfintervalls nur das jeweils zu prüfende Einspritzventil (10) geöffnet und geschlossen wird oder die Einspritzventile (10) nacheinander geöffnet und geschlossen werden.

12. Verfahren nach einem der Ansprüche 1 bis 10, dadurch gekennzeichnet, daß alle Einspritzventile (10) zur Prüfung gleichzeitig mindestens geöffnet, vorzugsweise auch geschlossen, werden.

13. Verfahren nach Anspruch 11 oder 12, dadurch gekennzeichnet, daß die Einspritzventile (10) durch eine an eine Zuleitung zur Motorelektronik angeschlossene Prüfsteuerung oder Auswertelektronik geöffnet bzw. geschlossen werden.

14. Verfahren nach einem der Ansprüche 11 bis 13, dadurch gekennzeichnet, daß zur Druckluftversorgung aller Einspritzventile (10) eine zum Verteilerrohr (17) führende Brennstoffzufuhrleitung (18) mit Druckluft etwas unterhalb des Systemdrucks durch eine der Prüfsteuerung zugeordnete Druckluftversorgungseinrichtung (22) mit Druckluft gespeist wird.

15. Verfahren nach einem der Ansprüche 1 bis 14, dadurch gekennzeichnet, daß die Prüfung des Systemdruckreglers (11) bei geschlossenen Einspritzventilen (10) durchgeführt wird, wobei vorzugsweise der Systemdruckregler (11) zur Prüfung mit Druckluft beaufschlagt wird, deren Druck geringfügig über dem eingestellten Nenndruck bzw. Systemdruck des Systemdruckreglers (11) ist.

16. Verfahren nach einem der Ansprüche 1 bis 15, dadurch gekennzeichnet, daß der Leerlaufsteller (12) zur Prüfung durch die Prüfsteuerung in verschiedene Betriebsstellungen gebracht wird.

17. Verfahren nach Anspruch 16, dadurch gekennzeichnet, daß zur Prüfung des Leerlaufstellers (12) sein Luftansaugstutzen (Bypassversorgungsleitung 28) mit einer Blende (27) versehen wird.

18. Verfahren nach Anspruch 16 oder 17, dadurch gekennzeichnet, daß die Prüfung des Leerlaufstellers (12) bei geschlossener Drosselklappe (19) durchgeführt wird.

## Claims

1. Method for the testing of parts for internal-combustion engines during engine assembly, especially of a part or parts of an injection system, at least the internal-combustion engine being driven under traction in the cold test, and specific measurement values, which were recorded during the cold testing of the internal-combustion engine only, being compared with corresponding measurement values which were obtained during the cold testing of the internal-combustion engine and of one or each part to be tested.

2. Method according to Claim 1, characterized in that individual parts of an injection system are tested in succession.

3. Method according to Claim 1 or 2, characterized in that the measurement values determined only in the internal-combustion engine are used for testing a plurality of, especially all, the components to be tested.

4. Method according to one of Claims 1 to 3, characterized in that pressure measurement values, especially the exhaust-gas counterpressure and/or the intake vacuum, are compared with one another.

5. Method according to one of Claims 1 to 4, characterized in that, in order to determine the measurement values related only to the internal-combustion engine, the components to be tested are brought into an operating position, in which they do not influence the measurement values to be determined only on the internal-combustion engine, in particular the components are not supplied with compressed air or allow no passage of compressed air.

6. Method for the testing of a part mounted on the fuel-supply section of an internal-combustion engine or of correspondingly mounted parts of an injection system, the or each part of the injection system being mounted on the fuel-supply section and subsequently being loaded with compressed air for test purposes.

7. Method according to one of Claims 1 to 6, characterized in that fuel connections are connected to a compressed-air supply device (22).

8. Method according to Claim 6 or 7, characterized in that the injection valves (10) and the system-pressure controller (11) are tested when the internal-combustion engine is not under traction.

9. Method according to one of Claims 6 to 8, characterized in that the pressure signals in the fuel-supply system loaded with compressed air, especially in the fuel-supply line, are used for testing the injection valves (10) and the system controller (11).

10. Method according to one of Claims 1 to 9, characterized in that the testing of the components is carried out with a throttle flap (19) fully opened and with a diaphragm (26) arranged in front of the throttle flap (19), in order to reduce or throttle the supply of air to the intake line (air-supply line 25).

11. Method according to one of Claims 1 to 10, characterized in that the testing of injection valves (10) takes place with all the injection valves (10) being loaded with compressed air on the inlet side, particularly in such a way that the injection valves (10) are individually tested in succession, in that, during the entire test interval, only the particular injection valve (10) to be tested is opened and closed or the injection valves (10) are opened and closed in succession.

12. Method according to one of Claims 1 to 10, characterized in that, for testing, all the injection valves (10) are simultaneously at least opened and preferably at least also closed.

13. Method according to Claim 11 or 12, characterized in that the injection valves (10) are opened and closed by means of a test control or evaluation electronics connected to a feed line to the engine electronics.

14. Method according to one of Claims 11 to 13, characterized in that, in order to supply compressed air to all the injection valves (10), a fuel-supply line (18) leading to the distributor pipe (17) is fed with compressed air somewhat below the system pressure by means of a compressed-air supply device (22) assigned to the test control.

15. Method according to one of Claims 1 to 14, characterized in that the testing of the system-pressure controller (11) is carried out with the injection valves (10) closed, and, for testing, preferably the system-pressure controller (11) being loaded with compressed air, the pressure of which is slightly above the set nominal pressure or system pressure of the system-pressure controller (11).

16. Method according to one of Claims 1 to 15, characterized in that the idling adjuster (12) is brought into various operating positions for testing by means of the test control.

17. Method according to Claim 16, characterized in that, to test the idling adjuster (12), its air-intake port (bypass supply line 28) is provided with a diaphragm (27).

18. Method according to Claim 16 or 17, characterized in that the testing of the idling adjuster (12) is carried out with the throttle flap (19) closed.

## Revendications

1. Procédé d'essai d'un élément ou d'éléments de moteurs à combustion interne lors du montage du moteur, en particulier d'un élément ou d'éléments d'un équipement d'injection, dans lequel au moins le moteur à combustion interne est actionné par entraînement dans l'essai à froid et des valeurs mesurées déterminées qui ont été enregistrées dans l'essai à froid seulement du moteur sont comparées avec des valeurs mesurées correspondantes qui ont été trouvées lors de l'essai à froid du moteur et d'un ou de chaque élément à essayer.

2. Procédé selon la revendication 1, caractérisé par le fait que des éléments d'un équipement d'injection sont essayés l'un après l'autre.

3. Procédé selon l'une des revendications 1 et 2, caractérisé par le fait que les valeurs mesurées trouvées seulement dans le moteur sont utilisées pour l'essai de plusieurs éléments à essayer, en particulier de tous.

4. Procédé selon l'une des revendications 1 à 3, caractérisé par le fait que des valeurs mesurées de pression, en particulier de la contre-pression des gaz d'échappement et/ou de la dépression d'aspiration, sont comparées entre elles.

5. Procédé selon l'une des revendications 1 à 4, caractérisé par le fait que, pour la détermination des valeurs mesurées relatives seulement au moteur, les éléments à essayer sont mis dans une position de fonctionnement dans laquelle ils n'influent pas sur les valeurs mesurées à déterminer seulement sur le moteur, en particulier les éléments ne sont pas alimentés en air comprimé ou ne permettent pas le passage d'air comprimé.

6. Procédé d'essai d'un élément monté sur la voie d'alimentation en carburant d'un moteur à combustion interne ou d'éléments montés de façon correspondante d'un équipement d'injection, dans lequel l'élément ou chaque élément de l'équipement d'injection est monté sur la voie d'alimentation en carburant et, pour l'essai, alimenté en air comprimé.

7. Procédé selon l'une des revendications 1 à 6, caractérisé par le fait que des raccords de carburant sont raccordés à un dispositif d'alimentation en air comprimé (22).

8. Procédé selon l'une des revendications 6 et 7, caractérisé par le fait que les injecteurs (10) et le régulateur de pression de l'installation (11) sont essayés sur le moteur non entraîné.

9. Procédé selon l'une des revendications 6 à 8, caractérisé par le fait que, pour l'essai des injecteurs (10) et du régulateur de l'installation (11), sont utilisés les signaux de pression dans le système d'amenée de carburant alimenté en air comprimé, en particulier dans la conduite d'alimentation en carburant.

10. Procédé selon l'une des revendications 1 à 9, caractérisé par le fait que l'essai des éléments est effectué avec le papillon des gaz (19) complètement ouvert et un diaphragme (26) placé en amont de celui-ci pour réduire ou étrangler l'amenée d'air à la conduite d'aspiration (conduite d'alimentation en air 25).

11. Procédé selon l'une des revendications 1 à 10, caractérisé par le fait que l'essai des injecteurs (10) est effectué avec alimentation en air comprimé du côté entrée de la totalité de ceux-ci, en particulier de façon telle que les injecteurs (10) soient essayés individuellement l'un après l'autre par, pendant tout l'intervalle d'essai, ouverture et fermeture seulement de l'injecteur (10) à essayer ou ouverture et fermeture des injecteurs (10) l'un après l'autre.

12. Procédé selon l'une des revendications 1 à 10, caractérisé par le fait que tous les injecteurs (10) sont, pour l'essai, au moins ouverts, et de préférence aussi fermés, en même temps.

13. Procédé selon l'une des revendications 11 et 12, caractérisé par le fait que les injecteurs (10) sont ouverts et fermés par une commande d'essai ou une électronique d'exploitation connectée à une ligne d'alimentation de l'électronique du moteur.

14. Procédé selon l'une des revendications 11 à 13, caractérisé par le fait que, pour l'alimentation en air comprimé de tous les injecteurs (10), une conduite d'amenée de carburant (18) allant au tuyau de distribution (17) est alimentée en air comprimé un peu au-dessous de la pression de l'installation par un dispositif d'alimentation en air comprimé (22) associé à la commande d'essai.

15. Procédé selon l'une des revendications 1 à 14, caractérisé par le fait que l'essai du régulateur de pression de l'installation (11) est effectué avec les injecteurs (10) fermés, le régulateur de pression de l'installation (11) étant de préférence, pour l'essai, alimenté en air comprimé dont la pression est légèrement supérieure à la pression nominale ou pression de l'installation fixée du régulateur de pression de l'installation (11).

16. Procédé selon l'une des revendications 1 à 15, caractérisé par le fait que l'ajusteur de ralenti (12) est, pour l'essai, mis dans différentes positions de fonctionnement par le commande d'essai.

17. Procédé selon la revendication 16, caractérisé par le fait que, pour l'essai de l'ajusteur de ralenti (12), la tubulure d'aspiration d'air (conduite d'alimentation en dérivation (28) de celui-ci est pourvue d'un diaphragme (27).

18. Procédé selon l'une des revendications 16 et 17, caractérisé par le fait que l'essai de l'ajusteur de ralenti (12) est effectué avec le papillon des gaz (19) fermé.
